# EUROPEAN PATENT APPLICATION

(11) **EP 4 538 083 A1**
(43) Date of publication of application: **16.04.2025**
(21) Application number: 22945132.3
(22) Date of filing: 06.06.2022
(51) Int. Cl.: B60K 5/12, F02F 7/00

(54) **MOUNTING BRACKET**

(71) Applicant: NISSAN MOTOR CO., LTD., Kanagawa 221-0023 (JP)
(72) Inventor: YABE, Tadashi, Atsugi-shi, Kanagawa 243-0123 (JP); MOCHIDA, Osamu, Atsugi-shi, Kanagawa 243-0123 (JP); KUDOU, Masahiro, Atsugi-shi, Kanagawa 243-0123 (JP)
(74) Representative: Hoefer & Partner Patentanwälte mbB
(86) International application number: PCT/JP2022/022737
(87) International publication number: WO 2023/238176

(57) **Abstract**

An internal combustion engine-side mounting bracket (6) is made of metal, and has a plurality of mounting portions (10). Each mounting portion (10) is formed by a bulging portion having a semi-cylindrical cross section that protrudes forward with respect to an end surface, located at one end side, of an internal combustion engine (1). Since the internal combustion engine-side mounting bracket (6) has the plurality of mounting portions (10), it is possible to form the internal combustion engine-side mounting bracket (6) to be highly rigid and compact without having to form cross-sectional shapes of the plurality of mounting portions (10) to be large. Mountability into a vehicle can therefore be improved.

## Description

### TECHNICAL FIELD

The present invention relates to a mounting bracket for fixing an internal combustion engine to a vehicle body.

### BACKGROUND ART

For instance, Patent Document 1 discloses a resin front cover with which a mounting portion for fixing an internal combustion engine to a vehicle body is integrally formed.

However, since the front cover of Patent Document 1 is made of resin, when attempting to ensure rigidity of the mounting portion, it is necessary for a cross-sectional shape of the mounting portion to be formed large, and consequently, there is a risk that mountability into a vehicle will be deteriorated.

### CITATION LIST

### PATENT DOCUMENT

Patent Document 1: Internal Publication WO2020/183687

### SUMMARY OF THE INVENTION

A mounting bracket of the present invention comprises: a plurality of mounting portions for securing an internal combustion engine to a vehicle body, and the plurality of mounting portions are formed by respective bulging portions protruding forward with respect to an end surface, located at one end side, of the internal combustion engine.

Since the mounting bracket has the plurality of mounting portions formed by the respective bulging portions, it is possible to form the mounting bracket to be highly rigid and compact, thereby improving the mountability into a vehicle.

### RIEF DESCRIPTION OF THE DRAWINGS

Fig. 1 is an explanatory drawing schematically showing a configuration of an internal combustion engine to which the present invention is applied.
Fig. 2 is a front view of the internal combustion engine to which an internal combustion engine-side mounting bracket is attached.
Fig. 3 is an exploded perspective view of a front cover and the internal combustion engine-side mounting bracket which are attached to the internal combustion engine.
Fig. 4 is a back view of the internal combustion engine-side mounting bracket.
Fig. 5 is a perspective view of the internal combustion engine-side mounting bracket, viewed from its back side.
Fig. 6 is a perspective view of the internal combustion engine-side mounting bracket, viewed from its back side.

### EMBODIMENTS FOR CARRYING OUT THE INVENTION

An embodiment of the present invention will be described in detail below with reference to the drawings. In the drawings, an X-axis indicates an axis along a front-rear direction of an internal combustion engine 1 (an axis parallel to a center axis of a crankshaft of the internal combustion engine 1), a Y-axis indicates an axis along a right-left direction of the internal combustion engine 1 (an axis along a width direction of the internal combustion engine 1), and a Z-axis indicates an axis along an up-down direction (a vertical direction) of the internal combustion engine 1 (an axis parallel to a cylinder axis A of the internal combustion engine 1).

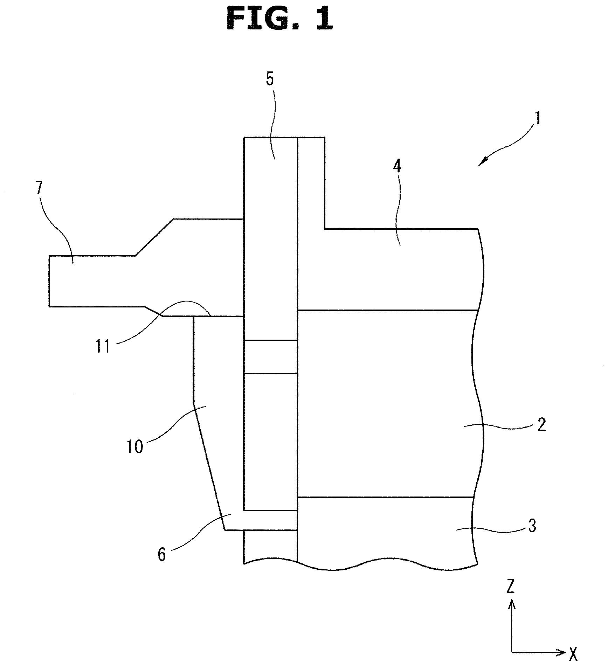

Fig. 1 is an explanatory drawing schematically showing a configuration of the internal combustion engine 1 to which the present invention is applied.

The internal combustion engine 1 is, for instance, an in-line multi-cylinder internal combustion engine. The internal combustion engine 1 has a cylinder head 2, a cylinder block 3 fixed to a lower portion of the cylinder head 2, a cam bracket 4 fixed to an upper portion of the cylinder head 2, a front cover 5 covering a front surface of the internal combustion engine 1 and a metal internal combustion engine-side mounting bracket 6 arranged on a front surface of the front cover 5. In Fig. 1, a reference sign 7 is a vehicle body-side mounting bracket fixed to a vehicle body side.

The cylinder head 2 is a casting made of metal material such as aluminum alloy. An intake port (not shown) for supplying intake air into a combustion chamber (not shown) and an exhaust port (not shown) for exhausting exhaust gas from the combustion chamber (not shown) are formed at the cylinder head 2.

The cylinder block 3 is a casting made of metal material such as aluminum alloy, and has cylinders (not shown) whose number corresponds to the number of the cylinders.

The cam bracket 4 is made of metal material such as aluminum alloy. The cam bracket 4 rotatably supports a camshaft (not shown) together with the cylinder head 2.

The front cover 5 is made of synthetic resin material such as polyamide. The front cover 5 is attached to an internal combustion engine body so as to cover a front surface of the internal combustion engine body. More specifically, the front cover 5 is secured to a front surface of the cylinder block 3, a front surface of the cylinder head 2, a front surface of the cam bracket 4 etc. with bolts (not shown). In other words, the front cover 5 is arranged so as to cover end surfaces, located at one end sides in the crankshaft axial direction, of the cylinder block 3 and the cylinder head 2, i.e**.** so as to cover an end surface, located at one end side in a cylinder line direction, of the internal combustion engine body. Here, the front cover 5 may be a casting made of metal material such as aluminum alloy.

The front cover 5 accommodates a crank sprocket (not shown) fixed to a front end of the crankshaft (not shown) and a cam sprocket (not shown) fixed to a front end of the camshaft (not shown) in a space formed between the front cover 5 and the front surface of the internal combustion engine body. A timing chain (not shown) for transmitting rotation power is would around these crank sprocket and cam sprocket.

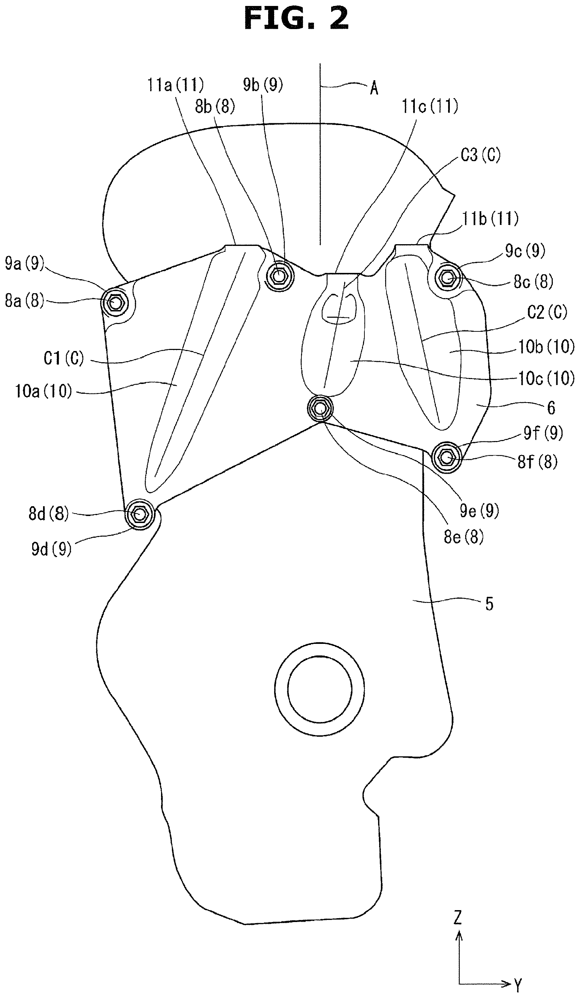

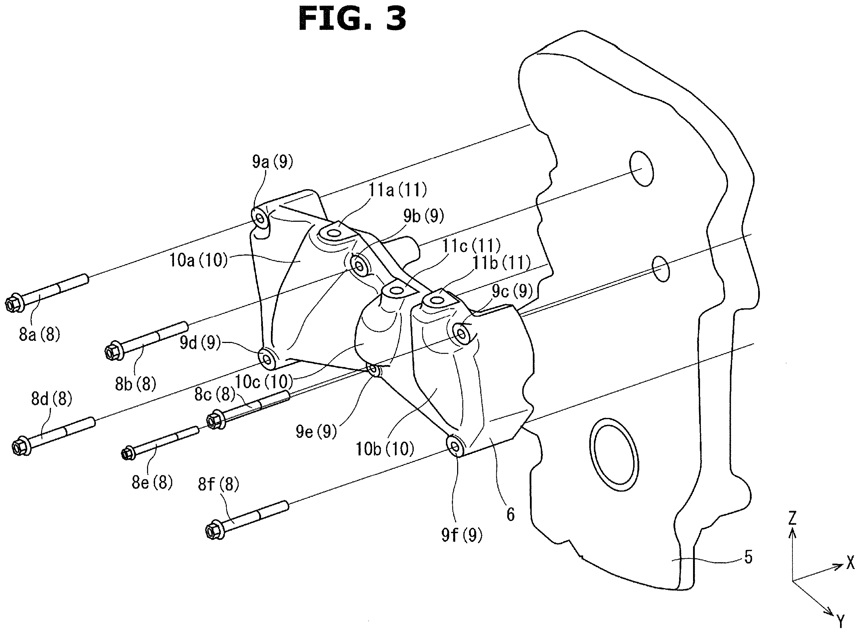

The internal combustion engine-side mounting bracket 6 corresponds to a mounting bracket, and is secured to the end surface, located at one end side in the cylinder line direction, of the internal combustion engine 1. The internal combustion engine-side mounting bracket 6 is a casting made of metal material such as aluminum alloy. As illustrated in Figs. 2 and 3, the internal combustion engine-side mounting bracket 6 is connected to the end surfaces, located at one end sides, of the cylinder head 2 and the cylinder block 3 with six bolts 8 of a first bolt 8a to a sixth bolt 8f. The bolts 8 penetrate respective bolt boss portions 9 of the internal combustion engine-side mounting bracket 6.

As illustrated in Figs. 2 and 3, the internal combustion engine-side mounting bracket 6 has six bolt boss portions 9 of a first bolt boss portion 9a to a sixth bolt boss portion 9f. Fig. 2 is a front view of the internal combustion engine 1 to which the internal combustion engine-side mounting bracket 6 is attached. Fig. 3 is an exploded perspective view of the front cover 5 and the internal combustion engine-side mounting bracket 6 which are attached to the internal combustion engine 1.

The first bolt 8a fixes an upper portion, located at one end side in the internal combustion engine width direction, of the internal combustion engine-side mounting bracket 6 to the cylinder head 2 outside the front cover 5. The first bolt 8a penetrates the first bolt boss portion 9a of the internal combustion engine-side mounting bracket 6.

The second bolt 8b penetrates the front cover 5, and fixes an upper portion, located at the substantially middle in the internal combustion engine width direction, of the internal combustion engine-side mounting bracket 6 to the cylinder head 2. The second bolt 8b penetrates the second bolt boss portion 9b of the internal combustion engine-side mounting bracket **6.**

The third bolt 8c fixes an upper portion, located at the other end side in the internal combustion engine width direction, of the internal combustion engine-side mounting bracket 6 to the cylinder head 2 outside the front cover 5. The third bolt 8c penetrates the third bolt boss portion 9c of the internal combustion engine-side mounting bracket 6.

The fourth bolt 8d fixes a lower portion, located at the one end side in the internal combustion engine width direction, of the internal combustion engine-side mounting bracket 6 to the cylinder block 3 outside the front cover 5. The fourth bolt 8d penetrates the fourth bolt boss portion 9d of the internal combustion engine-side mounting bracket 6.

The fifth bolt 8e penetrates the front cover 5, and fixes a lower portion, located at the substantially middle in the internal combustion engine width direction, of the internal combustion engine-side mounting bracket 6 to the cylinder block 3. The fifth bolt 8e penetrates the fifth bolt boss portion 9e of the internal combustion engine-side mounting bracket 6.

The sixth bolt 8f fixes a lower portion, located at the other end side in the internal combustion engine width direction, of the internal combustion engine-side mounting bracket 6 to the cylinder block 3 outside the front cover 5. The sixth bolt 8f penetrates the sixth boltboss portion 9f of the internal combustion engine-side mounting bracket 6.

As illustrated in Figs. 2 and 3, the internal combustion engine-side mounting bracket 6 has a plurality of (three) mounting portions 10. The mounting portions 10 are portions for securing the internal combustion engine 1 to the vehicle body, and their upper end surfaces 11 are fixed to the vehicle body-side mounting brackets 7 with bolts (not shown).

Each mounting portion 10 is formed by a bulging portion having a semi-cylindrical cross section (or a semi-tubular cross section) that protrudes forward with respect to the end surface, located at one end side, of the internal combustion engine 1. That is, a rear side portion of the mounting portion 10 is hollowed out. Here, "forward with respect to the end surface, located at one end side, of the internal combustion engine 1" means "forward with respect to the internal combustion engine 1", and indicates "toward a left side" in Fig. 1 and "frontward (forward) in a direction perpendicular to a paper surface" of Fig. 2. The mounting portion 10 is formed so as to extend in the up-down direction (the vertical direction) along the cylinder axis A of the internal combustion engine 1. That is, the mounting portion 10 has a long thin shape (or an elongated shape) extending in the up-down direction (the vertical direction), and its upper end surface 11 is fixed to the vehicle body-side mounting bracket 7. The upper end surface 11 is formed so as to be horizontal in a state in which the internal combustion engine 1 is mounted on the vehicle body.

The mounting portions 10 provided at the internal combustion engine-side mounting bracket 6 are a first mounting portion 10a located at one end side, in the internal combustion engine width direction, of the internal combustion engine-side mounting bracket 6, a second mounting portion 10b located at the other end side, in the internal combustion engine width direction, of the internal combustion engine-side mounting bracket 6, and a third mounting portion 10c located at the middle, in the internal combustion engine width direction, of the internal combustion engine-side mounting bracket 6. The first mounting portion 10a and the second mounting portion 10b are a pair of mounting portions located at both sides, in the internal combustion engine width direction, of the internal combustion engine-side mounting bracket **6.**

Regarding the first mounting portion 10a, its upper end surface 11a is fixed to the vehicle body-side mounting bracket 7. As illustrated in Fig. 2, the first mounting portion 10a is formed so that the first mounting portion 10a extends in the up-down direction (the vertical direction) along the cylinder axis A of the internal combustion engine 1, and its center line C1 in the up-down direction (the vertical direction) is inclined with respect to the cylinder axis A that is parallel to the Z-axis. More specifically, the first mounting portion 10a is formed obliquely so that its lower end, which is located at a lower side of the internal combustion engine-side mounting bracket 6, is positioned at the one end side in the internal combustion engine width direction with respect to its upper end (the upper end surface 11a), which is located at an upper side of the internal combustion engine-side mounting bracket 6.

Further, the first mounting portion 10a is formed so that its center line C1 is directed toward the fourth bolt 8d where the fourth bolt boss portion 9d penetrates the internal combustion engine-side mounting bracket **6.** That is, the first mounting portion 10a is formed so that its lower end is directed toward a securing point of the internal combustion engine-side mounting bracket 6 to the internal combustion engine 1.

With this, the internal combustion engine-side mounting bracket 6 easily supports or sustains a load received by the upper end surface 11a of the first mounting portion 10a at the securing point to the internal combustion engine 1, thereby improving overall rigidity.

Regarding the second mounting portion 10b, its upper end surface 11b is fixed to the vehicle body-side mounting bracket 7. As illustrated in Fig. 2, the second mounting portion 10b is formed so that the second mounting portion 10b extends in the up-down direction (the vertical direction) along the cylinder axis A of the internal combustion engine 1, and its center line C2 in the up-down direction (the vertical direction) is inclined with respect to the cylinder axis A that is parallel to the Z-axis. More specifically, the second mounting portion 10b is formed obliquely so that its lower end, which is located at the lower side of the internal combustion engine-side mounting bracket 6, is positioned at the other end side in the internal combustion engine width direction with respect to its upper end (the upper end surface 11b), which is located at the upper side of the internal combustion engine-side mounting bracket **6.**

Further, the second mounting portion 10b is formed so that its center line C2 is directed toward the sixth bolt 8f where the sixth bolt boss portion 9f penetrates the internal combustion engine-side mounting bracket 6. That is, the second mounting portion 10b is formed so that its lower end is directed toward a securing point of the internal combustion engine-side mounting bracket 6 to the internal combustion engine 1.

With this, the internal combustion engine-side mounting bracket 6 easily supports or sustains a load received by the upper end surface 11b of the second mounting portion 10b at the securing point to the internal combustion engine 1, thereby improving overall rigidity.

Regarding the third mounting portion 10c, its upper end surface 11c is fixed to the vehicle body-side mounting bracket 7. As illustrated in Fig. 2, the third mounting portion 10c is formed so that the third mounting portion 10c extends in the up-down direction (the vertical direction) along the cylinder axis A of the internal combustion engine 1, and its center line C3 in the up-down direction (the vertical direction) is inclined with respect to the cylinder axis A that is parallel to the Z-axis. More specifically, the third mounting portion 10c is formed obliquely so that its lower end, which is located at the lower side of the internal combustion engine-side mounting bracket 6, is positioned at the one end side in the internal combustion engine width direction with respect to its upper end (the upper end surface 11c), which is located at the upper side of the internal combustion engine-side mounting bracket 6.

Further, the third mounting portion 10c is formed so that its center line C3 is directed toward the fifth bolt 8e where the fifth bolt boss portion 9e penetrates the internal combustion engine-side mounting bracket 6. That is, the third mounting portion 10c is formed so that its lower end is directed toward a securing point of the internal combustion engine-side mounting bracket 6 to the internal combustion engine 1.

With this, the internal combustion engine-side mounting bracket 6 easily supports or sustains a load received by the upper end surface 11c of the third mounting portion 10c at the securing point to the internal combustion engine 1, thereby improving overall rigidity.

Further, the first mounting portion 10a and the second mounting portion 10b are formed so that an interval between the first mounting portion 10a and the second mounting portion 10b in the internal combustion engine width direction is wider (greater) toward the lower side in the up-down direction (the vertical direction) along the cylinder axis A of the internal combustion engine 1. The first mounting portion 10a and the third mounting portion 10c are formed so that an interval between the first mounting portion 10a and the third mounting portion 10c in the internal combustion engine width direction is wider (greater) toward the lower side in the up-down direction (the vertical direction) along the cylinder axis A of the internal combustion engine 1.

The second mounting portion 10b and the third mounting portion 10c are formed so that an interval between the second mounting portion 10b and the third mounting portion 10c in the internal combustion engine width direction is wider (greater) toward the lower side in the up-down direction (the vertical direction) along the cylinder axis A of the internal combustion engine 1.

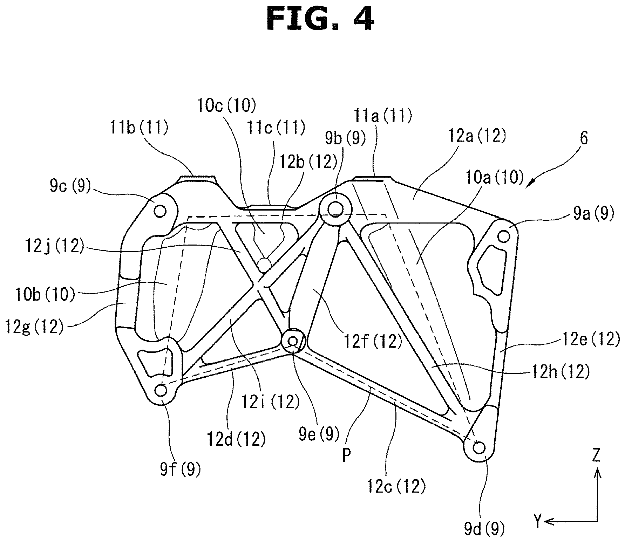

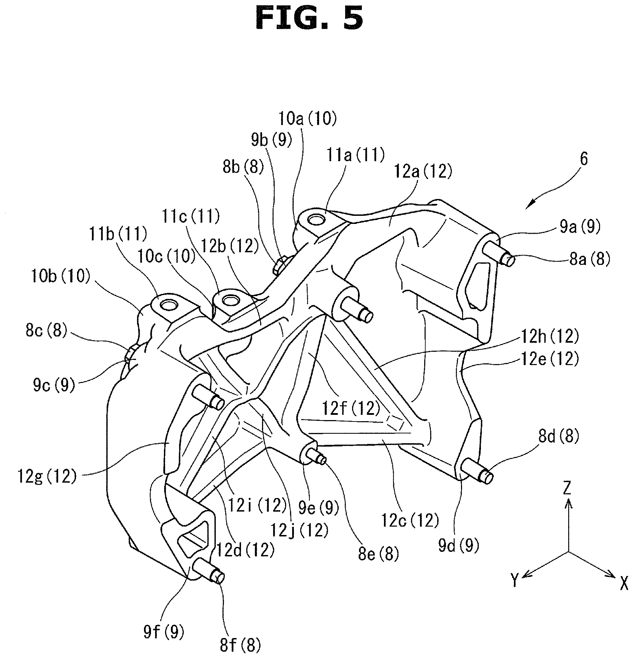

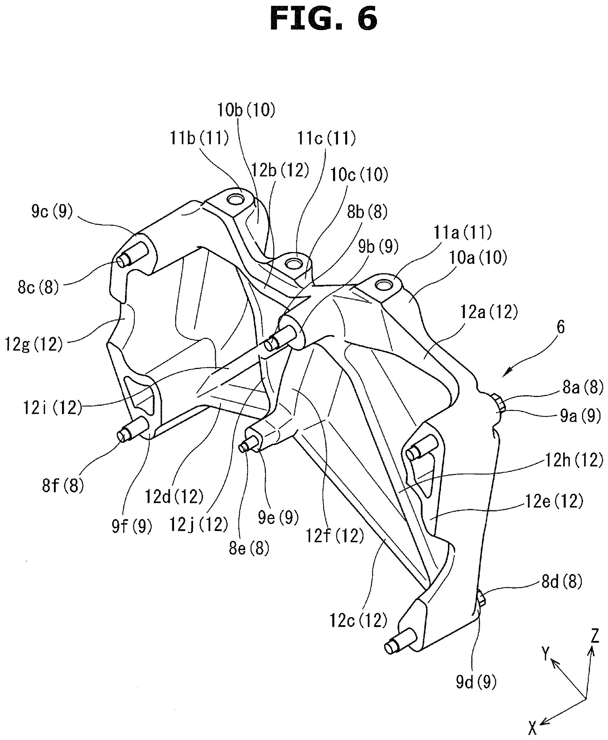

As illustrated in Figs. 4 to 6, the internal combustion engine-side mounting bracket 6 has a plurality of ribs 12. Fig. 4 is a back view of the internal combustion engine-side mounting bracket 6. Figs. 5 and 6 are perspective views of the internal combustion engine-side mounting bracket 6, viewed from its back side (its rear side) .

The ribs 12 are ribs for increasing rigidity of the internal combustion engine-side mounting bracket 6. The ribs 12 connect the securing points of the internal combustion engine-side mounting bracket 6 to the internal combustion engine 1 and connect the mounting portions 10 and the securing points of the internal combustion engine-side mounting bracket 6 to the internal combustion engine 1. In other words, the ribs 12 connect the bolt boss portions 9 and connect the mounting portions 10 and the bolt boss portions 9. The ribs 12 are formed into a ridge shape that protrudes from a back surface of the internal combustion engine-side mounting bracket 6 toward the one end surface side of the internal combustion engine 1. The ribs 12 are formed, for instance, as a solid body.

In the present embodiment, ten ribs 12 of a first rib 12a to a tenth rib 12j are provided at the internal combustion engine-side mounting bracket 6.

The first rib 12a corresponds to an upper rib. The first rib 12a extends linearly along the internal combustion engine width direction, and connects the first bolt boss portion 9a and the second bolt boss portion 9b. Further, the first rib 12a is connected to an upper end of the first mounting portion 10a.

The second rib 12b corresponds to an upper rib. The second rib 12b extends linearly along the internal combustion engine width direction, and connects the second bolt boss portion 9b and the third bolt boss portion 9c. Further, the second rib 12b is connected to an upper end of the second mounting portion 10b and an upper end of the third mounting portion 10c.

The third rib 12c corresponds to a lower rib. The third rib 12c extends obliquely linearly in the internal combustion engine width direction, and connects the fourth bolt boss portion 9d and the fifth bolt boss portion 9e. Further, the third rib 12c is connected to a lower end of the first mounting portion 10a and a lower end of the third mounting portion 10c.

The fourth rib 12d corresponds to a lower rib. The fourth rib 12d extends obliquely linearly in the internal combustion engine width direction, and connects the fifth bolt boss portion 9e and the sixth bolt boss portion 9f. Further, the fourth rib 12d is connected to a lower end of the second mounting portion 10b and the lower end of the third mounting portion 10c.

The fifth rib 12e extends linearly along the up-down direction (the vertical direction) along the cylinder axis A of the internal combustion engine 1, and connects the first bolt boss portion 9a and the fourth bolt boss portion 9d. Further, the fifth rib 12e is connected to the lower end of the first mounting portion 10a.

The sixth rib 12f extends obliquely linearly in the up-down direction (the vertical direction) along the cylinder axis A of the internal combustion engine 1, and connects the second bolt boss portion 9b and the fifth bolt boss portion 9e. Further, the sixth rib 12f is connected to the upper end of the first mounting portion 10a and the lower end of the third mounting portion 10c.

The seventh rib 12g extends in the up-down direction (the vertical direction) along the cylinder axis A of the internal combustion engine 1, and connects the third bolt boss portion 9c and the sixth bolt boss portion 9f. Further, the seventh rib 12g is formed so as to be curved in an arc shape toward an outer side of the internal combustion engine 1 with respect to the second mounting portion 10b in the internal combustion engine width direction. Then, an upper end of the seventh rib 12g is connected to the upper end of the second mounting portion 10b, and a lower end of the seventh rib 12g is connected to the lower end of the second mounting portion 10b.

The eighth rib 12h extends obliquely linearly in the up-down direction (the vertical direction) along the cylinder axis A of the internal combustion engine 1, and connects the second bolt boss portion 9b and the fourth bolt boss portion 9d. Further, the eighth rib 12h is connected to the upper end and the lower end of the first mounting portion 10a.

The ninth rib 12i extends obliquely linearly in the up-down direction (the vertical direction) along the cylinder axis A of the internal combustion engine 1, and connects the second bolt boss portion 9b and the sixth bolt boss portion 9f. Further, the ninth rib 12i is connected to the upper end of the first mounting portion 10a and the lower end of the second mounting portion 10b.

The tenth rib 12j extends obliquely linearly in the up-down direction (the vertical direction) along the cylinder axis A of the internal combustion engine 1, and connects the upper end of the second mounting portion 10b and the fifth bolt boss portion 9e. Further, the tenth rib 12j is formed so as to cross the third mounting portion 10c.

The internal combustion engine-side mounting bracket 6 in the embodiment described above is made of metal, and has the plurality of mounting portions 10a to 10c formed by the respective bulging portions protruding forward with respect to the end surface, located at one end side, of the internal combustion engine 1. It is therefore possible to form the internal combustion engine-side mounting bracket 6 to be highly rigid and compact without having to form cross-sectional shapes of the mounting portions 10a to 10c to be large, thereby improving the mountability into the vehicle.

Further, the mounting portions 10 are formed so as to extend in the up-down direction (the vertical direction) along the cylinder axis A of the internal combustion engine 1. Therefore, rigidity of the internal combustion engine-side mounting bracket 6 in the up-down direction can be high, then both the high rigidity and compactness of the internal combustion engine-side mounting bracket 6 can be efficiently achieved.

The mounting portions 10 are formed so that the mounting portions 10 extend in the up-down direction (the vertical direction) along the cylinder axis A of the internal combustion engine 1, and their center lines C in the up-down direction (the vertical direction) are inclined with respect to the cylinder axis A that is parallel to the Z-axis. Therefore, rigidity of the internal combustion engine-side mounting bracket 6 in the right-left direction when viewed from the axial direction of the crankshaft of the internal combustion engine 1 can be high, then both the high rigidity and compactness of the internal combustion engine-side mounting bracket 6 can be efficiently achieved.

The lower ends, in the up-down direction (the vertical direction) along the cylinder axis A of the internal combustion engine 1, of the adjacent mounting portions 10 are connected to each other at the back side by the ribs 12.

More specifically, the upper end of the first mounting portion 10a and the upper end of the third mounting portion 10c are connected by the first rib 12a and the second rib 12b. The lower end of the first mounting portion 10a and the lower end of the third mounting portion 10c are connected by the third rib 12c. That is, the first mounting portion 10a and the third mounting portion 10c are connected to each other by the first rib 12a, the second rib 12b and the third rib 12c. Also, the upper end of the second mounting portion 10b and the upper end of the third mounting portion 10c are connected by the second rib 12b. The lower end of the second mounting portion 10b and the lower end of the third mounting portion 10c are connected by the fourth rib 12d. That is, the second mounting portion 10b and the third mounting portion 10c are connected to each other by the second rib 12b and the fourth rib 12d.

With this, rigidity of the internal combustion engine-side mounting bracket 6 in the right-left direction when viewed from the axial direction of the crankshaft of the internal combustion engine 1 can be high more efficiently, then both the high rigidity and compactness of the internal combustion engine-side mounting bracket 6 can be achieved more efficiently.

The internal combustion engine-side mounting bracket 6 is formed so that a contour line P formed by connecting the plurality of mounting portions 10 and the plurality of ribs 12 continues annularly when viewed from the axial direction of the crankshaft of the internal combustion engine 1.

More specifically, internal combustion engine-side mounting bracket 6 is formed so that the contour line P formed by connecting the first rib 12a and the second rib 12b which connect the upper ends, in the up-down direction (the vertical direction) along the cylinder axis A of the internal combustion engine 1, of the plurality of mounting portions 10a, 10b and 10c at the back side, the third rib 12c and the fourth rib 12d which connect the lower ends, in the up-down direction (the vertical direction) along the cylinder axis A of the internal combustion engine 1, of the plurality of mounting portions 10a, 10b and 10c at the back side, and the first mounting portion 10a and the second mounting portion 10b which are located at both sides, in the internal combustion engine width direction orthogonal to the cylinder line direction of the internal combustion engine 1, of the internal combustion engine-side mounting bracket 6, continues annularly while including the upper ends of the plurality of mounting portions 10a, 10b and 10c and the lower ends of the mounting portions 10a, 10b and 10c when viewed from the axial direction of the crankshaft of the internal combustion engine 1.

With this, since the contour line P formed by connecting the plurality of mounting portions 10a, 10b and 10c and the plurality of ribs 12a, 12b, 12c and 12d can continue annularly, rigidity of the internal combustion engine-side mounting bracket 6 can beincreased more efficiently.

Further, the securing points of the internal combustion engine-side mounting bracket 6 to the internal combustion engine 1 are connected by the fifth to tenth ribs 12e, 12f, 12g, 12h, 12i and 12j. This can also improve rigidity of the internal combustion engine-side mounting bracket 6.

Although the specific embodiment of the present invention has been described, the present invention is not limited to the above embodiment, and can be realized in various configurations without departing from the scope of the present invention.

For instance, the number of the mounting portions 10 is not limited to three, but could be set according to the number of the vehicle body-side mounting brackets 7. That is, for instance, the vehicle body-side mounting bracket 7 fixing the front surface side (the front end side) of the internal combustion engine body to the vehicle body is four in number, the number of the mounting portions 10 is four.

Furthermore, the internal combustion engine-side mounting bracket 6 may be formed so that the center line C, in the up-down direction, of at least one of the plurality of mounting portions 10 is inclined with respect to the cylinder axis A that is parallel to the Z-axis, and the rest is parallel to the Z-axis.

Moreover, the mounting portion 10 may be formed so that its center line C is directed toward the boss portion 9. In addition, the mounting portion 10 might be formed so that its center line C is not directed toward the bolt 8 and the boss portion 9.

## Claims

1. A mounting bracket fixed to an end surface, located at one end side in a cylinder line direction, of an internal combustion engine, the mounting bracket comprising:
a plurality of mounting portions for securing the internal combustion engine to a vehicle body, wherein
the plurality of mounting portions are formed by respective bulging portions protruding forward with respect to the end surface, located at the one end side, of the internal combustion engine.

2. The mounting bracket as claimed in claim 1, wherein
the plurality of mounting portions are formed so as to extend in an up-down direction along a cylinder axis of the internal combustion engine.

3. The mounting bracket as claimed in claim 2, wherein
at least one of the plurality of mounting portions is formed so that its center line in the up-down direction is inclined with respect to the cylinder axis when viewed from an axial direction of a crankshaft of the internal combustion engine.

4. The mounting bracket as claimed in claim 2 or 3, wherein
the adjacent mounting portions are connected to each other by ribs.

5. The mounting bracket as claimed in claim 2 or 3, further comprising:
a plurality of ribs connected to the plurality of mounting portions,
wherein the mounting bracket is formed so that a contour line formed by connecting the plurality of mounting portions and the plurality of ribs continues annularly when viewed from an axial direction of a crankshaft of the internal combustion engine.
